# EUROPÄISCHE PATENTSCHRIFT

(11) **EP 0 931 640 B1**
(45) Veröffentlichungstag und Bekanntmachung des Hinweises auf die Patenterteilung: **07.05.2003**
(21) Anmeldenummer: 99101172.7
(22) Anmeldetag: 22.01.1999
(51) Int. Cl.: B29C 67/24, B29C 47/40, B29B 7/48

(54) **Verwendung einer Vorrichtung zum schussweisen Mischen und Ausbringen von in der Kavität eines Formwerkzeugs einer Spritzgiessmaschine ausreagierenden und aushärtenden Mehrkomponenten-Kunststoffen**
Use of an apparatus for shotwise mixing and extruding of reaction injection molding multicomponent plastics
Utilisation d'un appareil pour mélanger et extruder en étapes des mélanges réactifs à multicomposants pour le moulage réaction-injection

(30) Priorität: 23.01.1998 DE 19802428
(43) Veröffentlichungstag der Anmeldung: 28.07.1999
(73) Patentinhaber: KLÖCKNER DESMA SCHUHMASCHINEN GmbH, 28832 Achim (DE)
(72) Erfinder: Hannemann, Axel, 33739 Bielefeld (DE)
(74) Vertreter: Röther, Peter, Dipl.-Phys.

(56) Entgegenhaltungen:
- EP-A- 0 468 666
- EP-A- 0 708 124
- WO-A-97/12746
- DE-A- 2 423 764
- DE-A- 3 920 422
- "LEISTUNGSVERMOEGEN DEUTLICH GESTEIGERT" PLASTVERARBEITER, Bd. 48, Nr. 10, Oktober 1997, Seite 62, 64, 66, 68 XP000733004
- SCHÖNFELD S: "ZWEIWELLENAXTRUDER - WIRTSCHAFTLICH BEIM RAKTIVEN AUFBEREITEN" KUNSTSTOFFE, Bd. 84, Nr. 10, 1. Oktober 1994, Seiten 1308-1310, 1312, XP000468207
- MICHAELI W ET AL: "TWIN-SCREW EXTRUDERS FOR REACTIVE EXTRUSION" POLYMER ENGINEERING & SCIENCE, Bd. 35, Nr. 19, 15. Oktober 1995, Seiten 1485-1504, XP000545722
- PATENT ABSTRACTS OF JAPAN vol. 099, no. 001, 29. Januar 1999 & JP 10 272624 A (TOKYO INK KK), 13. Oktober 1998
- PATENT ABSTRACTS OF JAPAN vol. 099, no. 001, 29. Januar 1999 & JP 10 264233 A (JAPAN STEEL WORKS LTD:THE), 6. Oktober 1998

## Beschreibung

Die Erfindung betrifft die Verwendung einer Vorrichtung bestehend aus einer Mischkammer und zwei darin gleichsinnig oder gegenläufig rotierbar angeordneten Mischschnecken, wobei in der Mischkammer zumindest eine Einlaßöffnung für die KunststoffKomponenten und eine Auslaßöffnung zum Ausbringen der gemischten Mehrkomponenten-Kunststoffe in die Formwerkzeugkavität einer Spritzgießmaschine vorhanden sind, wobei die Mischkammer aus zwei sich in ihrer Symmetrieebene überlappende parallele zylindrische Bohrungen besteht, in denen je eine Mischschnecke angeordnet ist, die einerseits in der Symmetrieachse miteinander kämmen und mit den Schneckenstegen andererseits jeweils die Innenwandungen der zylindrischen Bohrungen berühren, wobei das Verhältnis der Mischkammerlänge zum Mischkammerdurchmesser im Bereich zwischen 10 und 20 liegt und die Drehzahl der Schnecken im Bereich zwischen 1000 und 4000/min liegt.

Derartig aufgebaute Vorrichtungen sind aus dem Stand der Technik (beispielsweise DE-OS 24 23 764, WO-A-9712746, EP-A-0708124, EP-A-0468666) bekannt. Mit Hilfe dieser vorbekannten Mischaggregate, die eine beträchtliche Länge aufweisen (bis zu 1,5 m), werden die Mehrkomponenten-Kunststoffe innerhalb des Schneckenraumes nicht nur intensiv gemischt, sie reagieren auch innerhalb der Schnecke aus, so daß am Ende des Aggregats ein Halbfertigprodukt ausgetrieben wird, welches dann weiterverarbeitet wird, beispielsweise einer Granulation zugeführt wird. D.h., daß mit Hilfe dieser überdimensionierten Doppelschnecken Ausgangsprodukte für nachfolgende Fertigungen produziert werden.

Die sich beim Einsatz dieser Schnecken ergebenden Vorteile sollen gemäß der Erfindung in Maschinen zur Schuhherstellung genutzt werden.

Die Erfindung besteht daher in der Verwendung einer obengenannten Vorrichtung zum schußweisen Mischen und Ausbringen von in der Kavität eines Formwerkzeugs einer Spritzgießmaschine ausreagierenden und aushärtenden Mehrkomponenten-Kunststoffen, insbesondere Polyurethan.

Zu diesem Zweck werden bisher Vorrichtungen verwendet, wie sie beispielsweise aus der DE-PS 44 14 582 bekannt sind. Hier ist in einer konisch zulaufenden Mischkammer eine ebenfalls konisch zulaufende Mischschnecke rotierbar angeordnet, die gegenüber der Innenwand der Mischkammer ein bestimmtes Spiel bzw. eine Spaltbreite aufweist. Da sich im Laufe der Zeit ausreagierende Materialien sowohl an der Gehäuseinnenwandung als auch auf den Schneckenstegen absetzen und dort aushärten, ist die Mischschnecke auch axial in der Mischkammer verschiebbar, so daß durch Verkleinern der obengenannten Spaltbreite beim Vorschieben der Schnecke die Schneckenstege die Ablagerungen von der Gehäuseinnenwand abschaben. Um auch bei den Schneckenstegen selbst einen Selbstreinigungseffekt zu erreichen, rotiert die Schnecke mit bis zu 18 000 U/min, so daß die dort anhaftenden Ablagerungen infolge der Fliehkraft nach außen weggeschleudert werden. Durch die hohe Drehzahl der Schnecke, die sehr energieaufwendig ist, ist eine schonende Behandlung der zu mischenden Komponenten nicht unbedingt gewährleistet.

Daher ist im Stand der Technik auch bereits vorgeschlagen worden, in einer konisch zulaufenden Mischkammer zwei miteinander kämmende, ebenfalls konische Schnecken vorzusehen, wie in der DE 39 20 422 A1 beschrieben. Auch hier werden die an der Gehäuseinnenwand anhaftenden Ablagerungen durch axiales Verschieben der Doppelschnecke entfernt. Der Selbstreinigungseffekt der Schnekkenstege ergibt sich dadurch, daß die Schnecken miteinander kämmen und sich hierbei gegenseitig selbst reinigen.

Nachteilig bei diesen vorbekannten Lösungen ist jedoch der konstruktiv aufwendige Aufbau, der sich fertigungstechnisch durch die konische Ausgestaltung sowohl der Mischkammer als auch der Schnecken selbst ergibt. Darüber hinaus wird bei dieser Lösung zusätzlich zum Rotationsantrieb der beiden Schnecken ein axialer Antrieb der Schnecken benötigt.

Bei der erfindungsgemäßen Verwendung der anfangs beschriebenen Vorrichtung wird mit Drehzahlen um 3000 U/min und einer Temperatur von etwa 50° C gearbeitet. Die Verweilzeit des Materials in der Mischkammer beträgt < 10 Sekunden. Nur so kann in schonender Weise eine schnelle Schußfolge gewährleistet sein.

Das Material wird in der Mischkammer lediglich zusammengebracht und intensiv vermischt. Die Reaktion erfolgt dann erst nachdem diese Mischung in die Formkavität bzw. Formkavitäten ausgebracht worden ist. Nur in diesem Zustand ist das Material in der Lage, den Formhohlraum vollständig auszufüllen, bevor die Aushärtereaktion beginnt.

Gegenüber dem zweitgenannten Stand der Technik hat die erfindungsgemäße Verwendung der Doppelschneckenvorrichtung darüber hinaus den Vorteil, daß ein axialer Antrieb der Schnecken nicht erforderlich ist, da die Schneckenstege mit ihren Außenkanten so nah an die Innenwandungen der Bohrungen heranreichen, daß beim Mischen der Komponenten Ablagerungen auf den Innenwandungen erst gar nicht entstehen können. Durch die Bewegung der Schneckenstege wird der sich auf der Innenwand absetzende Gemischfilm kontinuierlich abgeschabt und als kleine Brösel ausgetragen. Die beiden parallelen Bohrungen überlappen sich in ihrer Symmetrieebene, so daß die Mischkammer im Querschnitt einen in etwa achtförmigen Umfang aufweist.

Die intensive Mischung der eingebrachten Komponenten findet im Kämmbereich der beiden gegenläufig bzw. auch gleichsinnig rotierenden Schnecken statt. Durch den Kämmvorgang ergibt sich der aus dem Stand der Technik bereits bekannte Selbstreinigungseffekt, so daß die Rotationsfrequenz der Schnecken erheblich unterhalb der Rotationsfrequenz der aus dem Stand der Technik bekannten Einzelschnecke liegen kann, wie bereits weiter oben ausgeführt. Durch die relativ niedrigen Rotationsfrequenzen ist gewährleistet, daß der Energieaufwand zum Antrieb der Schnecken sowie der Verschleiß derselben entscheidend verringert wird. Darüber hinaus spielen Unwuchten in den Schnecken nicht die Rolle wie bei den extrem schnell rotierenden Schnecken. Durch die relativ langsame Rotationsgeschwindigkeit der Schnecken ist zudem eine schonende Behandlung der eingeführten Kunststoffkomponenten sichergestellt.

Gemäß dem Patentanspruch 2 ist in der Mischkammer neben der/den Einlaßöffnung(en) für die Kunststoffkomponenten eine weitere Einlaßöffnung für die Zuführung von Schüttgütern, insbesondere Korkschrot vorgesehen.

Es hat sich überraschenderweise herausgestellt, daß mit Hilfe der verwendeten Vorrichtung dem Mehrkomponenten-Kunststoff zusätzlich partikelförmige Materialien, wie z.B. Korkkörner, homogen zugemischt werden können, wodurch sich zum eine gewünschte Materialeigenschaften ergeben und zum anderen durch die Hinzufügung beispielsweise des Korkschrots Kunststoffmaterial eingespart werden kann.

Zum Einbringen derartiger Schüttgüter schlägt der Anspruch 3 vor, daß diese mit Hilfe einer Schüttelrinne in die Mischkammer eingegeben werden, bzw. gemäß Anspruch 4, daß die Zuführung der Schüttgüter mittels einer an die Einlaßöffnung angeflanschten Stopfschnecke erfolgt.

Um den Misch- und Verteileffekt der Kunststoffkomponenten zu verbessern, schlägt der Anspruch 5 vor, daß neben Schneckenstegenabschnitten auf der Schneckenwelle Knetorgane angeordnet sind, wobei die Knetorgane vorzugsweise im Bereich der Einlaßstelle für die Komponenten angeordnet sind.

Um die Schnecke bzw. die Mischkammer schnell und auf unkomplizierte Weise bestimmten Produkterfordernissen anpassen zu können, schlägt der Anspruch 6 vor, daß die Schnecken einen modularen Aufbau aufweisen, dergestalt, daß Schneckenstegelemente bzw. Knetelemente auf die Schneckenwelle aufschiebbar sind, und daß gemäß Anspruch 7 auch die Mischkammer modular aufgebaut ist.

Somit ist es möglich, die Schnecke in bestimmte Bereiche aufzuteilen, von denen ein Bereich der Knetbereich ist und der Mischbereich aus Schneckenstegelementen besteht, die gemäß Anspruch 9 voneinander verschiedene Gangsteigungen aufweisen. So kann z.B. der Bereich der Schneckenspitzen eine kleinere Gangsteigung aufweisen als der nach hinten anschließende Bereich, so daß die wirksame Schneckenlänge so kurz wie möglich gestaltet werden kann, wodurch sich darüber hinaus der Vorteil eines geringen Gewichts ergibt.

Da beim Mischvorgang infolge des Kämmeffekts der beiden Schnekken und durch die exotherme Reaktion der zusammengemischten Kunststoffkomponenten erhebliche Wärme in der Mischkammer entsteht, sieht der Patentanspruch 8 vor, daß die Mischkammer mit einer Kühleinrichtung ausgestaltet ist, die beispielsweise aus in der Gehäusewand vorgesehenen Kühlkanälen besteht.

Die Erfindung wird im folgenden anhand von Zeichnungen näher erläutert.

Es zeigen:
- Fig. 1:: in schematischer Darstellung eine Mischkammer mit darin rotierbar angeordneten Doppelschnecken in einer ersten Ausführungsform,
- Fig. 2:: Darstellung gemäß Fig. 1 in einer zweiten Ausführungsform.

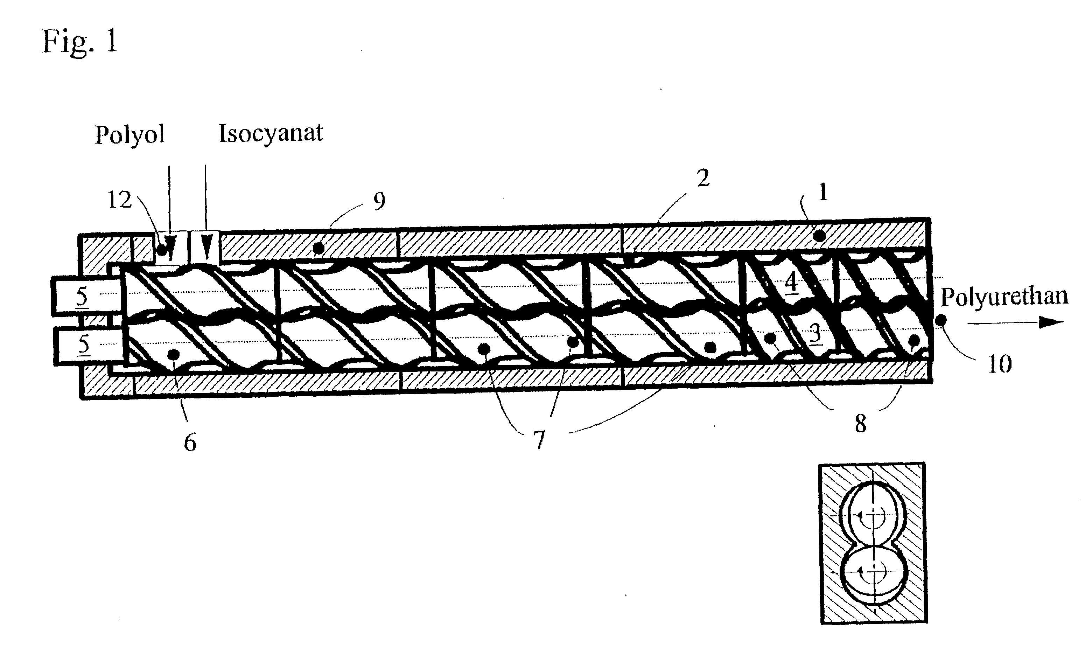

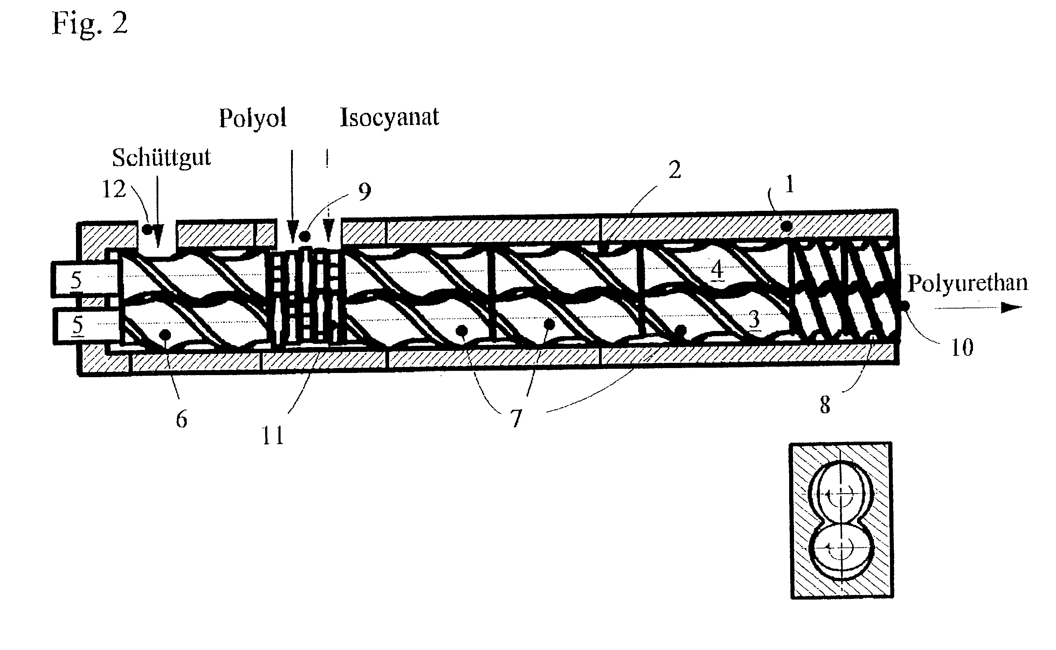

In den Figuren 1 und 2 sind gleiche Teile mit den gleichen Bezugszeichen versehen.

Die erfindungsgemäß verwendete Vorrichtung besteht aus einem Mischkammergehäuse 1, welches eine Mischkammer 2 umschließt, die aus zwei zueinander parallelen zylindrischen Bohrungen besteht, die sich in der Symmetrieebene der Mischkammer 1 überlappen und so einen in etwa acht-förmigen Querschnitt aufweisen. In den Bohrungen sind gegensinnig bzw. gleichläufig rotierende Schnecken 3 und 4 angeordnet, deren Wellen 5 mittels eines nicht dargestellten Antriebs außerhalb des Gehäuses 1 synchron antreibbar sind. Auf die Wellen 5 sind im vorliegenden Beispiel jeweils drei Schneckenstegelemente 6, 7 und 8 aufgeschoben, von denen die Elemente 6 und 7 gleiche Gangsteigungen aufweisen, das Schneckenstegelement 8, welches die Spitze der Schnecken 3 bzw. 4 bildet, jedoch mit einer kleineren Gangsteigung versehen sind.

Lediglich schematisch dargestellt ist die Einfüllöffnung 9 in der Mischkammergehäusewand für die zu mischenden KunststoffKomponenten, beispielsweise Polyol und Isocyanat, die mittels geeigneter Dosiereinrichtungen (beispielsweise einer Kolbendosiereinheit) in gewünschter Menge eingefüllt werden.

Die Schnecken 3 und 4 sind in der Mischkammer 2 so angeordnet, daß sie in der Symmetrieebene miteinander kämmen, die Schneckenstege außen jedoch die Innenwand der Mischkammer 2 berühren.

Hierdurch ist zum einen eine gute Mischwirkung und zum anderen ein Selbstreinigungseffekt der Schnecken bzw. der Mischkammerwand gewährleistet. Der Selbstreinigungseffekt für die Schnecken 3 und 4 resultiert aus dem Kämmen der Schnecken miteinander. Die Gehäuseinnenwand wird von anhaftenden Partikeln dadurch gereinigt, daß durch die Rotationsbewegung der Schneckenstege diese die Ablagerungen von der Innenwand kontinuierlich abschaben und als Brösel durch die Auslaßöffnung 10 austragen.

Die Schnecken rotieren mit Frequenzen zwischen 100 und 4000 U/min, wodurch eine gute Vermischung und eine gleichmäßige Porenstruktur des ausgetragenen Materials erzielt wird. Kleinere Rotationsfrequenzen führen zu nicht befriedigenden Ergebnissen.

In der Fig. 2 sind die Schnecken derart modifiziert, daß zwischen den Schneckenstegelementen 6 und 7 ein Segment mit Knetelementen 11 auf die Wellen 5 aufgeschoben ist.

Im Bereich der Schneckenstegelemente 6 ist eine weitere Einlaßöffnung 12 in der Gehäusewand des Mischkammergehäuses 1 vorgesehen, durch die dem Gemisch beizumischende Schüttgüter in die Mischkammer 2 eingeführt werden können. Derartige Schüttgüter sind beispielsweise Korkschrotkörner, die durch die Kombination von Knetelementen 11 und Schneckenstegelementen 6, 7, 8 dem Mehrkomponenten-Kunststoff homogen beigemischt werden. Die Knetelemente 11 sind ihrerseits aus scheibenförmigen Einzelsegmenten aufgebaut und auf die Welle 5 aufgeschoben. Zum Einfüllen der Schüttgüter dienen (nicht dargestellte) Schüttelrinnen oder Stopfschnecken.

Sowohl beim Ausführungsbeispiel gemäß Fig. 1 als auch Fig. 2 ist das Mischkammergehäuse 1 mit einer Kühlvorrichtung versehen, die jedoch aus Übersichtlichkeitsgründen nicht dargestellt ist. Beispielsweise können in die Mischkammerwand Kühlmittelkanäle eingearbeitet sein.

## Patentansprüche

1. Verwendung einer Vorrichtung, bestehend aus einer Mischkammer und zwei darin gleichsinnig oder gegenläufig rotierbar angeordneten Mischschnecken (3,4), wobei in der Mischkammer (2) zumindest eine Einlaßöffnung (9) für die KunststoffKomponenten und eine Auslaßöffnung (10) zum Ausbringen der gemischten Mehrkomponenten-Kunststoffe in die Formwerkzeugkavität einer Spritzgießmaschine vorhanden sind, wobei die Mischkammer (2) aus zwei sich in ihrer Symmetrieebene überlappende parallele zylindrische Bohrungen besteht, in denen je eine Mischschnecke (3,4) angeordnet ist, die einerseits in der Symmetrieachse miteinander kämmen und mit den Schneckenstegen andererseits jeweils die Innenwandungen der zylindrischen Bohrungen berühren, wobei das Verhältnis der Mischkammerlänge zum Mischkammerdurchmesser im Bereich zwischen 10 und 20 liegt und die Drehzahl der Schnecken im Bereich zwischen 1000 und 4000/min liegt, zum schußweisen Mischen und Ausbringen von in der Kavität eines Formwerkzeugs einer Spritzgießmaschine ausreagierenden und aushärtenden Mehrkomponenten-Kunststoffen, insbesondere Polyurethan.

2. Verwendung nach Anspruch 1, bei der über eine weitere Einlaßöffnung (12) Schüttgüter, insbesondere Korkschrot, zugeführt werden.

3. Verwendung nach Anspruch 2, bei der die Schüttgüter über eine Schüttelrinne zugeführt werden.

4. Verwendung nach Anspruch 2, bei der die Schüttgüter über eine an die Einlaßöffnung (12) angeflanschte Stopfschnecke zugeführt werden.

5. Verwendung nach einem der Ansprüche 1 bis 4, bei der bei der verwendeten Vorrichtung neben Schneckenstegenabschnitten (6,7,8) auf den Schneckenwellen (5) Knetorgane (11) angeordnet sind.

6. Verwendung nach einem der Ansprüche 1 bis 5, bei der die in der Vorrichtung angeordneten Schnecken (3,4) einen modularen Aufbau aufweisen, dergestalt, daß Schneckenstegelemente (6,7,8) bzw. Knetelemente (11) auf die Schneckenwelle (5) aufschiebbar sind.

7. Verwendung nach einem der Ansprüche 1 bis 6, bei der das in der Vorrichtung verwendete Mischkammergehäuse (1) modular aufgebaut ist.

8. Verwendung nach einem der Ansprüche 1 bis 7, bei der die Mischkammer (2) der verwendeten Vorrichtung mit einer Kühleinrichtung ausgestattet ist.

9. Verwendung nach einem der Ansprüche bis 8, bei der die zur Schnecke (3,4) zusammengestellten Schneckenstegelemente (6,7,8) der verwendeten Vorrichtung unterschiedliche Gangsteigung aufweisen, wobei der Bereich der Schneckenspitze (8) die kleinere Gangsteigung aufweist.

## Claims

1. Use of a device comprising a mixing chamber and two mixing screws (3, 4) arranged therein so as to be rotatable in the same direction or opposite directions, wherein at least one inlet opening (9) for the plastics-material components and an outlet opening (10) for discharging the mixed multiple-component plastics materials into the moulding-tool cavity of an injection-moulding machine are present in the mixing chamber (2), wherein the mixing chamber (2) comprises two parallel cylindrical bores which overlap in their plane of symmetry and in which one respective mixing screw (3, 4) is arranged in each case, the mixing screws (3, 4) meshing with each other in the axis of symmetry on the one hand and touching the inner walls of the cylindrical bores in each case with their screw lands on the other hand, wherein the ratio of the length of the mixing chamber to the diameter of the mixing chamber is in the range of between 10 and 20 and the rotational speed of the screws is in the range of between 1000 and 4000/min, for the shotwise mixing and discharge of multiple-component plastics materials, in particular polyurethane, which react and harden in the cavity of a moulding tool of an injection-moulding machine.

2. Use according to Claim 1, in which bulk materials, in particular granulated cork, are supplied by way of a further inlet opening (12).

3. Use according to Claim 2, in which the bulk materials are supplied by way of a shaking trough.

4. Use according to Claim 2, in which the bulk materials are supplied by way of a tamping screw flange-mounted on the inlet opening (12).

5. Use according to one of Claims 1 to 4, in which kneading members (11) are arranged beside screw-land portions (6, 7, 8) on the screw shafts (5) in the device used.

6. Use according to one of Claims 1 to 5, in which the screws (3, 4) arranged in the device have a modular design, in such a way that screw-land elements (6, 7, 8) or kneading elements (11) can be pushed onto the screw shaft (5).

7. Use according to one of Claims 1 to 6, in which the mixing-chamber housing (1) used in the device is designed in a modular manner.

8. Use according to one of Claims 1 to 7, in which the mixing chamber (2) of the device used is provided with a cooling device.

9. Use according to one of Claims [1] to 8, in which the screw-land elements (6, 7, 8) of the device used, which are assembled to form the screw (3, 4), have a different screw pitch, wherein the region of the screw tip (8) has the smaller screw pitch.

## Revendications

1. Utilisation d'un dispositif, se composant d'une chambre de mélange et de deux vis mélangeuses (3, 4) qui y sont disposées de manière à pouvoir tourner dans le même sens ou en sens contraire, au moins une ouverture d'entrée (9) pour les composants de matière plastique et une ouverture de sortie (10) pour la production de matières plastiques à plusieurs composants mélangés dans la cavité de l'outil de formage d'une presse d'injection existant dans la chambre de mélange (2), la chambre de mélange (2) se composant de deux trous cylindriques parallèles se chevauchant dans leur plan symétrique, dans lesquels des vis mélangeuses (3, 4) sont respectivement disposées, qui engrènent entre elles d'une part dans l'axe de symétrie et entrent en contact d'autre part par les crêtes des vis respectivement avec les parois internes des trous cylindriques, le rapport de la longueur de la chambre de mélange au diamètre de la chambre de mélange étant compris dans une gamme allant de 10 à 20 et la vitesse de rotation des vis étant comprise dans une gamme allant de 1000 à 4000/min, pour un mélange et une production par charge d'injection de matières plastiques à plusieurs composants réagissant et durcissant dans la cavité d'un outil de formage d'une presse d'injection, en particulier de polyuréthane.

2. Utilisation selon la revendication 1, pour laquelle des produits en vrac, en particulier des granulés crus, sont alimentés par l'intermédiaire d'une autre ouverture d'entrée (12).

3. Utilisation selon la revendication 2, pour laquelle les produits en vrac sont alimentés par l'intermédiaire d'une goulotte vibrante.

4. Utilisation selon la revendication 2, pour laquelle les produits en vrac sont alimentés par l'intermédiaire d'une vis sans fin de bourrage bridée à l'ouverture d'entrée (12).

5. Utilisation selon l'une des revendications 1 à 4, pour laquelle outre le dispositif utilisé des organes malaxeurs (11) sont disposés à côté de sections de crêtes des vis (6, 7, 8) sur les arbres des vis (5).

6. Utilisation selon l'une des revendications 1 à 5, pour laquelle les vis (3, 4) disposées dans le dispositif présentent une structure modulaire, de sorte que des éléments des crêtes des vis (6, 7, 8) ou des éléments malaxeurs (11) peuvent coulisser sur l'arbre de la vis sans fin (5) .

7. Utilisation selon l'une des revendications 1 à 6, pour laquelle le logement de la chambre de mélange (1) utilisé dans le dispositif est structuré de manière modulaire.

8. Utilisation selon l'une des revendications 1 à 7, pour laquelle la chambre de mélange (2) du dispositif utilisé est équipée d'un dispositif de refroidissement.

9. Utilisation selon l'une des revendications 1 à 8, pour laquelle les éléments des crêtes des vis (6, 7, 8) du dispositif utilisé assemblés à la vis (3, 4) présentent un pas de vis différent, le secteur de la pointe de la vis sans fin (8) présentant le plus petit pas de vis.
